# EUROPEAN PATENT APPLICATION

(11) **EP 2 716 542 A2**
(43) Date of publication of application: **09.04.2014**
(21) Application number: 12793505.4
(22) Date of filing: 31.05.2012
(51) Int. Cl.: B63J 2/14, B63H 21/38, B63B 25/16, F02M 21/02, F25J 1/00

(54) **COLD HEAT RECOVERY APPARATUS USING AN LNG FUEL, AND LIQUEFIED GAS CARRIER INCLUDING SAME**

(30) Priority: 31.05.2011 KR 20110052274; 08.06.2011 KR 20110055067; 29.07.2011 KR 20110076125
(71) Applicant: Daewoo Shipbuilding & Marine Engineering Co., Ltd., Seoul 100-180 (KR)
(72) Inventor: YOO, Byeong Yong, Seoul 151-910 (KR); MOON, Young Sik, Gyeonggi-do 423-733 (KR); JANG, Jae Ho, Jeollanam-do 550-160 (KR); KIM, Ji Eun, Seoul 130-101 (KR)
(74) Representative: Intès, Didier Gérard André
(86) International application number: PCT/KR2012/004279
(87) International publication number: WO 2012/165865

(57) **Abstract**

Provided are a cold heat recovery apparatus using an LNG fuel and a liquefied gas carrier, in which costs involved in the installation and operation of a reliquefying facility can be reduced by recovering and utilizing cold heat of the LNG fuel when boil-off gas of liquefied gas as a cargo is reliquefied, and energy saving and reduction of environmental pollutants can be achieved because additional energy is not consumed in a reliquefaction process. A cold heat recovery apparatus for processing boil-off gas generated in a liquefied gas tank by using cold heat of an LNG fuel includes cold heat usage means for using cold heat of an LNG supplied from an LNG fuel tank storing an LNG as a fuel to an engine, so as to process the boil-off gas generated in the liquefied gas tank.

## Description

### TECHNICAL FIELD

The present invention relates to a cold heat recovery apparatus using an LNG fuel and a liquefied gas carrier including the same, and more particularly, to a cold heat recovery apparatus using an LNG fuel and a liquefied gas carrier, in which costs involved in the installation and operation of a reliquefying facility can be reduced by recovering and utilizing cold heat of the LNG fuel when boil-off gas of liquefied gas as a cargo is reliquefied, and energy saving and reduction of environmental pollutants can be achieved because additional energy is not consumed in a reliquefaction process.

### BACKGROUND &ART

Recently, there has been an increasing demand for reducing SOx, NOx and CO₂ generated during the voyage of vessels. Due to such environmental problems and high oil prices, there have been proposed and developed vessels using clean fuel, LNG, as a propulsion fuel, instead of oil such as heavy oil or diesel oil. However, the vessel using the LNG as the propulsion fuel requires a separate apparatus for enabling the LNG to be used as fuel, which increases the cost of the vessel and blocks commercialization.

In order to reduce a volume of a fuel tank, the vessel using the LNG as the propulsion fuel stores the fuel as the LNG that is natural gas of a liquefied state. The fuel is evaporated before the LNG is used as the fuel. Cold heat (cold energy) generated at that time is all discharged to the outside.

On the other hand, in a liquefied gas carrier such as an LPG carrier or a CO₂ carrier, liquefied gas inside a liquefied gas tank is evaporated by continuous heat invasion from the outside during voyage, and thus, an internal pressure is increased. One of methods for controlling this problem is to use a reliquefaction facility that reliquefies the generated boil-off gas.

However, such a reliquefaction facility has a problem that increases the manufacturing cost of the liquefied gas carrier, makes the operation of the vessel complicated, consumes additional energy for operating the reliquefaction facility, and emits a large amount of environmental pollutants.

### DISCLOSURE

### TECHNICAL PROBLEM

The present invention has been made in an effort to solve the above problems, and is directed to provide a cold heat recovery apparatus and a liquefied gas carrier including the same, in which cold heat of an LNG used as fuel is recovered and used to control a pressure of liquefied gas being a cargo, thereby reducing costs involved in the installation and operation of a reliquefaction facility of the liquefied gas carrier and reducing environmental pollutants because additional fuel is not consumed in a reliquefaction process.

### TECHNICAL SOLUTION

According to one aspect of the present invention, a cold heat recovery apparatus for processing boil-off gas generated in a liquefied gas tank by using cold heat of an LNG fuel includes: cold heat usage means for using cold heat of an LNG supplied from an LNG fuel tank storing an LNG as a fuel to an engine, so as to process the boil-off gas generated in the liquefied gas tank.

The cold heat usage means may be a pressure control unit configured to control a pressure of the liquefied gas tank by using the cold heat of the LNG discharged from the LNG fuel tank, and the pressure control unit may include an LNG line installed to pass through the liquefied gas tank from the LNG fuel tank and configured to cause heat exchange between the LNG and a fluid stored in the liquefied gas tank.

The pressure control unit may further include a heater installed in front of the liquefied gas tank in the LNG line.

The pressure control unit may further include: a first bypass line connected to the LNG line to bypass the liquefied gas tank; a control valve configured to control a flow of the LNG passing through the first bypass line; a pressure detection unit installed in the liquefied gas tank and configured to measure a pressure inside the liquefied gas tank and output a detection signal; and a control unit configured to receive the detection signal output from the pressure detection unit and control the control valve.

The cold heat recovery apparatus may further include: an evaporator installed in rear of the liquefied gas tank in the LNG line; a temperature detection unit installed in rear of the evaporator in the LNG line and configured to measure a temperature of the fluid passing through the evaporator and output a detection signal; and a control unit configured to receive the detection signal output from the temperature detection unit and control a heat quantity of the evaporator.

The cold heat usage means may be a pressure control unit configured to control a pressure of the liquefied gas tank by using the cold heat of the LNG discharged from the LNG fuel tank, and the pressure control unit may include: an LNG line configured to transfer the LNG from the LNG fuel tank; a heat exchanger installed in the LNG line; and a coolant circulation line configured to circulate and supply a coolant to the heat exchanger and installed to pass through the liquefied gas tank.

The pressure control unit may further include: a make-up tank configured to supply the coolant to the LNG line; a pressure detection unit installed in the liquefied gas tank and configured to measure a pressure inside the liquefied gas tank and output a detection signal; and a control unit configured to receive the detection signal output from the pressure detection unit and control the supply of the coolant from the make-up tank to the LNG line.

The pressure control unit may further include: a coolant pump configured to provide a pumping force for circulating the coolant through the coolant circulation line; a pressure detection unit installed in the liquefied gas tank and configured to measure a pressure inside the liquefied gas tank and output a detection signal; and a control unit configured to receive the detection signal output from the pressure detection unit and control the pumping force of the coolant pump provided with a variable pump.

The pressure control unit may further include: a second bypass line connected to the LNG line to bypass the heat exchanger; a control valve configured to control a flow of the LNG passing through the second bypass line; a pressure detection unit installed in the liquefied gas tank and configured to measure a pressure inside the liquefied gas tank and output a detection signal; and a control unit configured to receive the detection signal output from the pressure detection unit and control the control valve.

The cold heat usage means may be a reliquefaction tank configured to reliquefy boil-off gas, which is supplied from the liquefied gas tank storing the liquefied gas through a gas pipeline, by using the cold heat of the LNG discharged from the LNG fuel tank, and return the reliquefied boil-off gas to the liquefied gas tank through a liquid pipeline.

An LNG line configured to discharge the LNG from the LNG fuel tank may be installed to pass through the reliquefaction tank, such that the boil-off gas is reliquefied by heat exchange with the LNG.

The cold heat recovery apparatus may further include: a gas manifold configured to supply the reliquefaction tank with boil-off gas supplied from each of a plurality of liquefied gas tanks; and a liquid manifold configured to distribute the reliquefied gas discharged from the reliquefaction tank to each of the liquefied gas tanks and return the reliquefied gas thereto.

The cold heat usage means may further include a coolant circulation unit configured to transfer the cold heat of the LNG discharged from the LNG fuel tank through the circulating coolant to the reliquefaction tank.

The coolant circulation unit may include: a heat exchanger installed in the LNG line through which the LNG is discharged from the LNG fuel tank; and a coolant circulation line configured to circulate and supply the coolant to the heat exchanger and installed to pass through the reliquefaction tank.

The cold heat recovery apparatus may further include: a bypass line connected to the LNG line to bypass the reliquefaction tank; and a control valve configured to control a flow of the LNG through the bypass line.

The cold heat recovery apparatus may further include: a detection unit configured to measure a temperature or pressure inside the reliquefaction tank and output a detection signal; and a control unit configured to receive the detection signal output from the detection unit and control the control valve.

The cold heat usage means may be a heat exchanger configured to perform heat exchange between boil-off gas, which is supplied from the liquefied gas tank storing the liquefied gas through a gas pipeline, and the LNG, which is discharged from the LNG fuel tank, and return the boil-off gas to the liquefied gas tank through a liquid pipeline.

The cold heat recovery apparatus may further include: a heater installed to provide heat to an inside of the heat exchanger; a temperature detection unit installed in the liquid pipeline and configured to measure a temperature of the reliquefied gas and output a detection signal; and a control unit configured to receive the detection signal of the temperature detection unit and control the heater.

According to another aspect of the present invention, a liquefied gas carrier for transporting liquefied gas includes: a storage tank capable of storing the liquefied gas as a cargo; an LNG fuel tank configured to store an LNG as a fuel; and the above-described cold heat recovery apparatus using the LNG fuel.

The liquefied gas stored as the cargo may be LPG or CO₂.

### ADVANTAGEOUS EFFECTS

According to the present invention, since the LNG is used as fuel, it is possible to reduce the emission of pollutants into the atmosphere. Furthermore, since the LNG fuel is used to control the pressure of the liquefied gas tank, the cost of the reliquefaction facility installed in the existing liquefied gas carrier can be reduced, the operation thereof can be simplified, and emission of CO₂ generated during the operation of the reliquefaction facility can be reduced.

In addition, according to the present invention, since the pressure of the liquefied gas tank is controlled using the LNG, the thickness of the liquefied gas tank is not increased, resulting in a reduction in the manufacturing cost of the liquefied gas tank.

In addition, according to the present invention, since the cold heat of the LNG is used to reduce the temperature or pressure of the liquefied gas, the cold heat can be recovered. Therefore, energy introduced through the evaporator for the purpose of use as the fuel can be reduced. Since the volume of the evaporator is reduced, the cost and energy consumption can be reduced.

Furthermore, according to the present invention, since energy necessary for driving the reliquefaction facility is minimized, the operation cost and the installation cost can be reduced.

Moreover, according to the present invention, the reliquefaction facility is configured in a forcible transmission method, it is possible to remove pipeline plugging caused by the sublimation of the boil-off gas that may be generated within the heat exchanger.

### BRIEF DESCRIPTION OF THE DRAWINGS

FIG. 1 is a configuration diagram illustrating a cold heat recovery apparatus using an LNG fuel according to a first embodiment of the present invention.
FIG. 2 is a configuration diagram illustrating a cold heat recovery apparatus using an LNG fuel according to a second embodiment of the present invention.
FIG. 3 is a configuration diagram illustrating a cold heat recovery apparatus using an LNG fuel according to a third embodiment of the present invention.
FIG. 4 is a configuration diagram illustrating a cold heat recovery apparatus using an LNG fuel according to a fourth embodiment of the present invention.
FIG. 5 is a configuration diagram illustrating a cold heat recovery apparatus using an LNG fuel according to a fifth embodiment of the present invention.
FIG. 6 is a configuration diagram illustrating a cold heat recovery apparatus using an LNG fuel according to a sixth embodiment of the present invention.
FIG. 7 is a configuration diagram illustrating a cold heat recovery apparatus using an LNG fuel according to a seventh embodiment of the present invention.

### DESCRIPTION OF EMBODIMENTS

Hereinafter, configurations and operations of preferred embodiments of the present invention will be described in detail with reference to the accompanying drawings. In addition, the following embodiments can be modified in various forms and are not intended to limit the scope of the present invention.

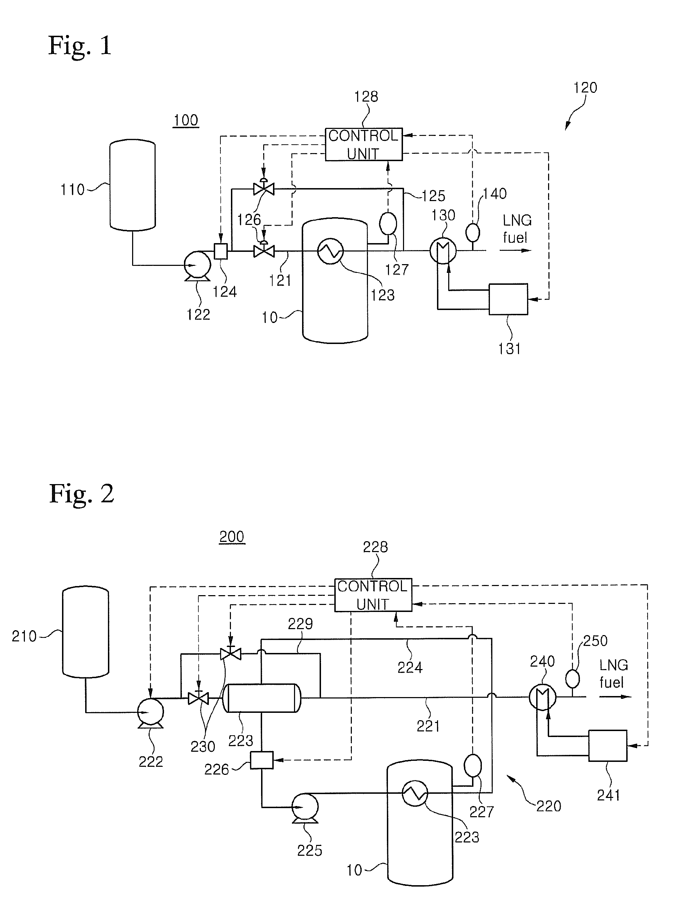

FIG. 1 is a configuration diagram illustrating a cold heat recovery apparatus using an LNG fuel according to a first embodiment of the present invention.

As illustrated in FIG. 1, the cold heat recovery apparatus 100 using the LNG fuel according to the first embodiment of the present invention may include an LNG fuel tank 110 configured to store an LNG as a fuel, and a pressure control unit 120 serving as cold heat usage means configured to control a pressure of a liquefied gas tank 10 by using a low-temperature characteristic, that is, cold heat of the LNG discharged from the LNG fuel tank 110. Herein, a liquefied gas tank 10 may store CO₂ or hydrocarbon liquefied gas such as an LPG, and other various liquefied gases as a cargo.

The LNG fuel tank 110 is made of a container for withstanding a pressure and low-temperature of the LNG, and stores the LNG used as a fuel of a liquefied gas carrier.

The pressure control unit 120 may include an LNG line 121 and a first pump 122. The LNG line 121 is installed to extend from the LNG fuel tank 110 and pass through the liquefied gas tank 10, such that heat exchange is performed between the LNG and the fluid stored in the liquefied gas tank 10. The first pump 122 is installed on the LNG line 121 to provide a pumping force for transferring the LNG through the LNG line 121.

A coil portion 123 having a coil shape may be formed in a portion of the LNG line 121 which passes through the inside of the liquefied gas tank 10. Therefore, the coil portion 123 of the LNG line 121 increases a pipeline length or a pipeline area inside the liquefied gas tank 10, which can increase the efficiency of heat exchange with the fluid stored in the liquefied gas tank 10. In addition, a rise in the pressure of the liquefied gas tank 10 can be efficiently reduced.

Furthermore, a temperature of the LNG within the LNG fuel tank 110 is about -163°C, and the temperature of the LNG slightly rises while the LNG passes through the first pump 122. While the LNG is stored at about -163°C, liquefied gas as a cargo, for example, CO₂, is stored at -50 to -20°C, and the LPG is stored at about -50°C. Therefore, the temperature of the LNG rises when the LNG passes through the liquefied gas tank 10, and then, the LNG has a condition suitable for an engine when the LNG passes through an evaporator 130 to be described below.

The LNG line 121 may pass through a portion where gas is located within the liquefied gas tank 10. Therefore, a rise in the pressure of the liquefied gas tank 10 is suppressed by reliquefying gases close to the cold LNG line 121 within the liquefied gas tank 10.

The LNG line 121 may pass through a liquid portion, that is, a portion where a liquid is located within the liquefied gas tank 10. Since a temperature of the liquefied gas within the liquefied gas tank 10 is lowered by the cold LNG line 121, a temperature of a free surface of the liquid is lowered, and thus, a saturation pressure on the free surface is lowered. Therefore, the pressure inside the liquefied gas tank 10 can be controlled.

The pressure control unit 120 may further include a heater 124 installed in the front of the liquefied gas tank 10 in the LNG line 121. The heater 124 increases the temperature of the LNG supplied to the liquefied gas tank 10 to some degree, so as to prevent thermal deformation of the liquefied gas tank 10 caused when the temperature of the LNG is too low, or prevent the liquefied gas from condensing around the LNG line 121 and becoming frost.

The pressure control unit 120 may further include a first bypass line 125 and a control valve 126. The first bypass line 125 is connected to the LNG line 121 to bypass the liquefied gas tank 10. The control valve 126 is installed in the LNG line 121 and the first bypass valve 125 to control the flow of the LNG through the liquefied gas tank 10 and the first bypass line 125. Therefore, the supercooling of the liquefied gas tank 10 is prevented by supplying the liquefied gas tank 10 with the LNG fuel such that only an amount of LNG fuel necessary for controlling the pressure of the liquefied gas tank 10 is used as a coolant. On the other hand, a pair of control valves 126 may be installed in the LNG line 121 and the first bypass line 125 one by one as in the present embodiment, but the present invention is not limited thereto. For example, a three-way valve may be used.

The pressure control unit 120 may further include a pressure detection unit 127 and a control unit 128. The pressure detection unit 127 is installed in the liquefied gas tank 10 to measure the pressure inside the liquefied gas tank 10 and output a detection signal. The control unit 128 receives the detection signal output from the pressure detection unit 127 and controls the control valve 126. The control unit 128 measures the pressure inside the liquefied gas tank 10 through the pressure detection unit 127. When the measured pressure is increased to above a set pressure, the control unit 128 may control the control valve 126 such that the LNG passes through the liquefied gas tank 10. When the measured pressure is decreased to the set pressure, the control unit 128 may control the control valve 126 such that the LNG bypasses the liquefied gas tank 10.

An evaporator 130 may be installed in the rear of the liquefied gas tank 10 in the LNG line 121. Therefore, the LNG has a condition suitable for an engine by evaporating the LNG having passed through the liquefied gas tank 10.

The cold heat recovery apparatus 100 using the LNG fuel according to the first embodiment of the present invention may further include a temperature detection unit 140 and a control unit 128. The temperature detection unit 140 is installed in the rear of the evaporator 130 in the LNG line 121 to measure the temperature of the fluid having passed through the evaporator 130 and output a detection signal. The control unit 128 receives the detection signal output from the temperature detection unit 140 and controls a heat quantity of the evaporator 130. When the temperature of the evaporated LNG measured in the rear of the evaporator 130 by the temperature detection unit 140 is too low to use the LNG as the fuel, the control unit 128 increases the heat quantity of the evaporator 130. On the contrary, when the temperature of the evaporated LNG is high, the control unit 128 reduces the heat quantity of the evaporator 130. The control unit 128 can control the heat quantity of the evaporator 130 by controlling a heat supply unit 131 that supplies the evaporator 130 with heat by electricity or through the medium of liquid or gas.

FIG. 2 is a configuration diagram illustrating a cold heat recovery apparatus using an LNG fuel according to a second embodiment of the present invention.

As illustrated in FIG. 2, like the first embodiment, the cold heat recovery apparatus 200 using the LNG fuel according to the second embodiment of the present invention may include an LNG fuel tank 210 and a pressure control unit 220 serving as cold heat usage means. The following description will focus on differences from the cold heat recovery apparatus 100 using the LNG fuel according to the first embodiment of the present invention.

The pressure control unit 220 may include an LNG line 221, a second pump 222, a heat exchanger 223, a coolant circulation line 224, and a coolant pump 225. The LNG line 221 is configured to transfer the LNG fuel from the LNG fuel tank 10. The second pump 222 is configured to provide a pumping force for transferring the LNG fuel through the LNG line 221. The heat exchanger 223 is installed in the LNG line 221. The coolant circulation line 224 is installed to pass through the liquefied gas tank 10 and configured to circulate the coolant and supply the coolant to the heat exchanger 223. The coolant pump 225 is configured to provide a pumping force for circulating the coolant through the coolant circulation line 224. The coolant is cooled by the heat exchange with the LNG passing through the LNG line 221, and the cooled coolant passes through the liquefied gas tank 10 by way of the coolant circulation line 224. In this manner, since cold heat is supplied to the liquefied gas tank 10, the liquefied gas inside the liquefied gas tank is cooled, and the pressure inside the liquefied gas tank 10 is controlled.

Preferably, the coolant has a freezing point (melting point) lower than the temperature of the LNG so as not to be condensed. Since the temperature of the coolant inside the closed loop, that is, the coolant circulation line 224, is higher than the temperature of the LNG, a thermal stress of the liquefied gas tank 10 can be reduced. In addition, it is possible to avoid a condensation problem in the vicinity of the pipeline due to the liquefied gas having a higher melting point than the LNG, for example, CO₂ or LPG.

A coil portion 232 having a coil shape may be formed in a portion of the coolant circulation line 224 which is inserted into the liquefied gas tank 10.

The pressure control unit 220 may include a make-up tank 226, a pressure detection unit 227, and a control unit 228. The make-up tank 226 supplies the coolant to the LNG line 221. The pressure detection unit 227 is installed in the liquefied gas tank 10 to measure the pressure inside the liquefied gas tank 10 and output a detection signal. The control unit 228 receives the detection signal output from the pressure detection unit 227 and controls the supply of the coolant from the make-up tank 226 to the LNG line 221. The control unit 228 can control an amount of coolant supplied from the make-up tank 226 to the LNG line 221 by a valve or a separate pump.

When the pressure of the liquefied gas tank 10 measured through the pressure detection unit 227 is increased, the control unit 228 discharges the coolant from the make-up tank 226, so that a flow rate of the coolant is increased. Thus, more heat can be removed in the heat exchanger 223, and a large heat quantity can be removed from the liquefied gas tank 10.

The pressure control unit 220 may further include a pressure detection unit 227 and a control unit 228. The pressure detection unit 227 is installed in the liquefied gas tank 10 to measure the pressure inside the liquefied gas tank 10 and output a detection signal. The control unit 228 receives the detection signal output from the pressure detection unit 127 and controls a pumping force of the coolant pump 225 provided with a variable pump. Therefore, the control unit 228 can control a coolant flow speed of the closed loop such that the pressure inside the liquefied gas tank 10 measured by the pressure detection unit 227 has a set pressure.

The pressure control unit 220 may further include a second bypass line 229, a control valve 230, a pressure detection unit 227, and a control unit 228. The second bypass line 229 is connected to the LNG line 221 to bypass the heat exchanger 223. The control valve 230 is installed in the LNG line 221 and the second bypass line 229 to control the flow of the LNG through the heat exchanger 223 and the second bypass line 229. The pressure detection unit 227 is installed in the liquefied gas tank 10 to measure the pressure inside the liquefied gas tank 10 and output a detection signal. The control unit 228 receives the detection signal output from the pressure detection unit 227 and controls the control valve 230. When the pressure inside the liquefied gas tank 10 measured by the pressure detection unit 227 is increased, the control unit needs to control the control valve 230 so as to remove a large heat quantity of the liquefied gas by the heat exchanger 223. Therefore, the control unit 228 reduces the flow rate of the LNG bypassing the heat exchanger 223 by the second bypass line 229. In the opposite case, the control unit 228 increases the flow rate of the LNG bypassing the heat exchanger 223. On the other hand, the control valve 230 may be provided with a pair of valves like the present embodiment, but the present invention is not limited thereto. For example, a single three-way valve may be used as the control valve 230.

Like the cold heat recovery apparatus 100 using the LNG fuel according to the first embodiment, the cold heat recovery apparatus 200 using the LNG fuel according to the second embodiment of the present invention may include an evaporator 240, a heat supply unit 241, and a temperature detection unit 250.

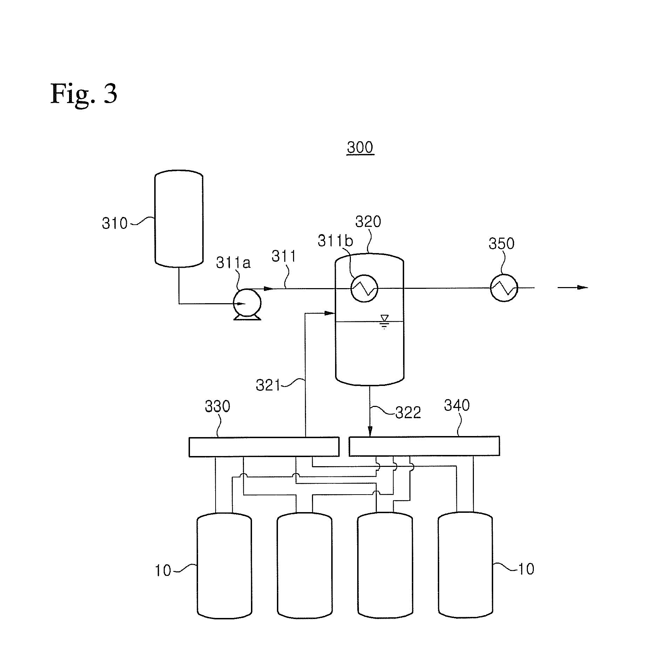

FIG. 3 is a configuration diagram illustrating a cold heat recovery apparatus using an LNG fuel according to a third embodiment of the present invention.

As illustrated in FIG. 3, the cold heat recovery apparatus 300 using the LNG fuel according to the third embodiment of the present invention may include a fuel tank 310 and a reliquefaction tank 320 serving as cold heat usage means.

The LNG fuel tank 310 is a tank for storing an LNG fuel of a liquefied gas carrier and is made of a container for withstanding a pressure and low-temperature of the LNG.

The reliquefaction tank 320 reliquefies boil-off gas supplied from the liquefied gas tank 10 storing the liquefied gas through a gas pipeline 321 by using cold heat of the LNG discharged from the LNG fuel tank 310, and supplies the reliquefied boil-off gas through a liquid pipeline 322 to the liquefied gas tank 10.

An LNG line 311 configured to transfer the LNG as the fuel discharged from the LNG fuel tank 310 is installed to pass through the reliquefaction tank 320. The reliquefaction tank 320 reliquefies the boil-off gas by the heat exchange with the LNG. The reliquefaction tank 320 may be installed at a position higher than the liquefied gas tank 10 such that reliquefied gas obtained by the heat exchange between the boil-off gas and the LNG is supplied through the liquid pipeline 322 to the liquefied gas tank 10 by gravity.

The LNG line 311 provides a passage for supplying the LNG to the engine or the like. In the LNG line 311, an LNG pump 311a is installed for pumping the LNG. A coil portion 311b may be provided for increasing a contact area in a portion of the LNG line 311 located within the reliquefaction tank 320. An evaporator 350 is installed to evaporate the LNG such that the LNG meets a condition as a fuel.

The cold heat recovery apparatus 300 using the LNG fuel according to the third embodiment of the present invention may further include a gas manifold 330 and a liquid manifold 340. The gas manifold 330 is configured to supply the reliquefaction tank 320 with boil-off gas supplied from each of the liquefied gas tanks 10. The liquid manifold 340 is configured to distribute the reliquefied gas discharged from the reliquefaction tank 320 to each of the liquefied gas tanks 10.

On the other hand, one reliquefaction tank 320 may be provided like the present embodiment, but the present invention is not limited thereto. For example, a plurality of reliquefaction tanks 320 may be provided. In this case, gas manifolds 330 and liquid manifolds 340 may be installed in the respective reliquefaction tanks 320, or a gas manifold 330 and a liquid manifold 340 may be integrally installed with respect to all reliquefaction tanks 320.

The gas manifold 330 and the liquid manifold 340 are installed in the gas pipeline 321 and the liquid pipeline 322, respectively. The gas pipeline 321 and the liquid pipeline 322 are branched into a plurality of pipelines such that the branched pipelines are connected to a plurality of liquefied gas tanks 10 on the basis of the gas manifold 330 and the liquid manifold 340.

In the cold heat recovery apparatus 300 using the LNG fuel according to the third embodiment of the present invention, when boil-off gas generated from the liquefied gas tank 10 usable as a cargo tank is supplied through the gas pipeline 321 to the reliquefaction tank 320, the boil-off gas is reliquefied by the heat exchange with the LNG of the LNG line 311 passing through the reliquefaction tank 320, and the reliquefied gas is resupplied to the liquefied gas tank 10 through the liquid pipeline 322.

In addition, it is possible to integrally manage the boil-off gas generated from the plurality of liquefied gas tanks 10 through the gas manifold 330 and the liquid manifold 340.

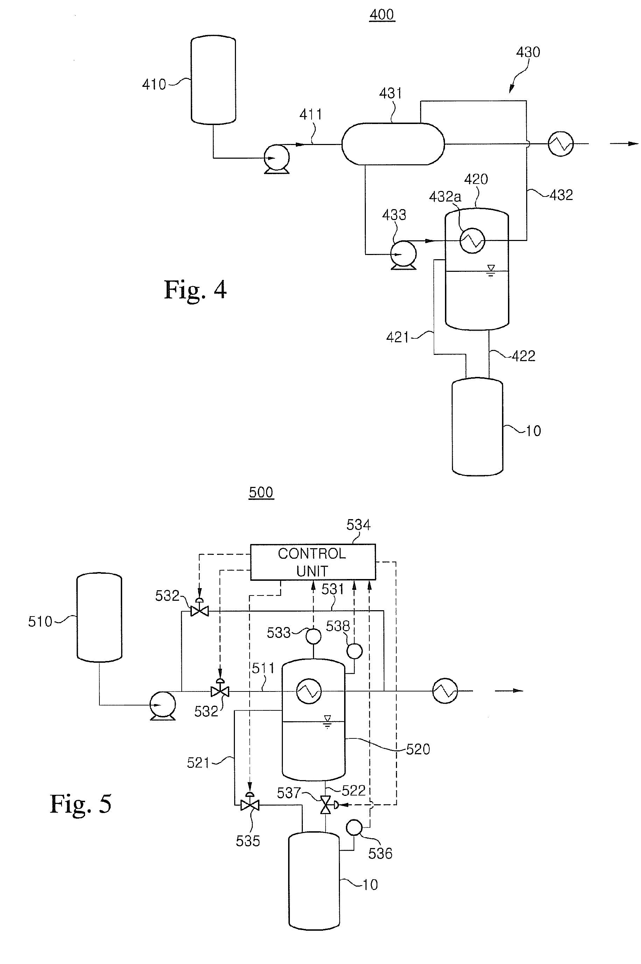

FIG. 4 is a configuration diagram illustrating a cold heat recovery apparatus using an LNG fuel according to a fourth embodiment of the present invention.

As illustrated in FIG. 4, like the cold heat recovery apparatus 300 using the LNG fuel according to the third embodiment, the cold heat recovery apparatus 400 using the LNG fuel according to the fourth embodiment of the present invention includes an LNG fuel tank 410 and a reliquefaction tank 420 serving as cold heat usage means. However, the reliquefaction tank 420 is configured to reliquefy boil-off gas by the heat exchange with a coolant supplied by a coolant circulation unit 430 using the LNG discharged from the LNG fuel tank 410, instead of the direct heat exchange with the LNG discharged from the LNG fuel tank 410 in order for use as the fuel.

The coolant circulation unit 430 may include a heat exchanger 431, a coolant circulation line 432, and a circulation pump 433. The heat exchanger 431 is installed in the LNG line 411 through which the LNG is discharged from the LNG fuel tank 410. The coolant circulation line 432 is installed to circulate and supply the coolant to the heat exchanger 431 and pass through the reliquefaction tank 420. The circulation pump 433 is configured to provide a pumping force for circulating the coolant through the coolant circulation line 432.

A coil portion 432a may be provided for increasing a contact area in a portion of the coolant circulation line 432 which is inserted into the reliquefaction tank 420.

As described above, in the cold heat recovery apparatus 400 using the LNG fuel according to the fourth embodiment of the present invention, the LNG discharged from the LNG fuel tank 410 through the LNG line 411 exchanges heat with the coolant circulated by the pumping force of the circulation pump 433 in the heat exchanger 431. The cooled coolant passes through the reliquefaction tank 420, and the boil-off gas supplied from the liquefied gas tank 10 through the gas pipeline 421 to the reliquefaction tank 421 is reliquefied by the heat exchange with the coolant and is resupplied through a liquid pipeline 422 to the liquefied gas tank 10.

Preferably, the coolant has a freezing point (melting point) lower than the temperature of the LNG so as not to be condensed. Since the temperature of the coolant inside the closed loop, that is, the coolant circulation line 224, is higher than the temperature of the LNG, a thermal stress of the liquefied gas tank 10 can be reduced. In addition, it is possible to avoid a condensation problem in the vicinity of the pipeline due to the liquefied gas having a higher freezing point than the LNG, for example, CO₂ or LPG.

FIG. 5 is a configuration diagram illustrating a cold heat recovery apparatus using an LNG fuel according to a fifth embodiment of the present invention.

As illustrated in FIG. 5, like the cold heat recovery apparatus 300 using the LNG fuel according to the third embodiment of the present invention, the cold heat recovery apparatus 500 using the LNG fuel according to the fifth embodiment of the present invention includes an LNG fuel tank 510 and a reliquefaction tank 520 serving as cold heat usage means. An LNG line 511 configured to discharge the LNG from the LNG fuel tank 10 is installed to pass through the reliquefaction tank 520, so that boil-off gas is reliquefied by the heat exchange with the LNG.

The cold heat recovery apparatus 500 using the LNG fuel according to the fifth embodiment of the present invention may further include a bypass line 531 and a control valve 532. The bypass line 531 is connected to the LNG line 511 to bypass the reliquefaction tank 520. The control valve 532 is installed in the LNG line 511 and the bypass line 531 to control the flow of the LNG through the reliquefaction tank 520 and the bypass line 531. Like the present embodiment, a pair of control valves 532 may be installed in the bypass line 531 and the LNG line 511, respectively. Alternatively, the control valve 532 may be a single three-way valve installed in a connection portion of the bypass line 531 and the LNG line 511.

The cold heat recovery apparatus 500 using the LNG fuel according to the fifth embodiment of the present invention may further include a detection unit 533 and a control unit 534. The detection unit 533 measures the temperature or pressure inside the reliquefaction tank 520 and outputs a detection signal. The control unit 534 receives the detection signal output from the detection unit 533 and controls the control valve 532.

The reliquefaction tank 520 may be forcibly supplied with boil-off gas from the liquefied gas tank 10 by a compressor (not illustrated) installed in a gas pipeline 521, or may forcibly transfer the reliquefied gas to the liquefied gas tank 10 by a transfer pump (not illustrated) installed in a liquid pipeline 522.

The cold heat recovery apparatus 500 using the LNG fuel according to the fifth embodiment of the present invention may further include a control valve 535, a pressure detection unit 536, and a control unit 534. The control valve 535 is installed in the gas pipeline 521. The pressure detection unit 536 measures the pressure inside the liquefied gas tank 10 and outputs a detection signal. The control unit 534 receives the detection signal of the pressure detection unit 536 and controls the control valve 535.

The cold heat recovery apparatus 500 using the LNG fuel according to the fifth embodiment of the present invention may further include a control valve 537, a water level detection unit 538, and a control unit 534. The control valve 537 is installed in the liquid pipeline 522. The water level detection unit 538 measures a water level of the reliquefaction tank 520 and outputs a detection signal. The control unit 534 receives the detection signal of the water level detection unit 538 and controls the control valve 537.

The cold heat recovery apparatus 500 using the LNG fuel according to the fifth embodiment of the present invention may further include a control valve 537, a pressure detection unit 536, and a control unit 534. The control valve 535 is installed in the gas pipeline 522. The pressure detection unit 536 measures the pressure inside the liquefied gas tank 10 and outputs a detection signal. The control unit 537 receives the detection signal of the pressure detection unit 536 and controls the control valve 535.

As described above, in the cold heat recovery apparatus 500 using the LNG fuel according to the fifth embodiment of the present invention, when the detection unit 533 detects that the temperature or pressure of the reliquefaction tank 520 is higher than a set temperature or a set pressure, the control unit 534 controls the control valve 532 such that the flow of the LNG via the LNG line 511 passing through the reliquefaction tank 520 is increased. When the detection unit 533 detects that the temperature or pressure of the reliquefaction tank 520 is lower than the set temperature or the set pressure, the control unit 534 controls the control valve 532 such that the flow of the LNG via the LNG line 511 is reduced and the flow of the LNG passing through the bypass line 531 is increased.

The reliquefaction tank 520 is configured to be smoothly supplied with boil-off gas from the liquefied gas tank 10 through the compressor, and to stably supply the reliquefied gas to the liquefied gas tank 10 by the transfer pump. When the temperature inside the reliquefaction tank 520 or the temperature of the LNG supplied to the reliquefaction tank 520 falls to below a set temperature, the reliquefaction tank 520 is configured to increase the temperature by causing a heater to provide heat.

When the pressure detection unit 536 detects that the pressure inside the liquefied gas tank 10 is higher than the set pressure, the control unit 534 may reduce the pressure inside the liquefied gas tank 10 by opening the control valve 535. When the pressure inside the liquefied gas tank 10 becomes lower than the set pressure, the control unit 534 may increase the pressure inside the liquefied gas tank 10 by closing the control valve 535.

In addition, the control unit 534 controls the control valve 537 such that the water level of the reliquefaction tank 520 measured by the water level detection unit 538 is maintained at a set water level. When the pressure inside the liquefied gas tank 10 detected by the pressure detection unit 536 is higher than the set pressure, the control unit 534 reduces the pressure and temperature inside the liquefied gas tank 10 by opening the control valve 537 to cause the cold reliquefied gas to flow into the liquefied gas tank 10.

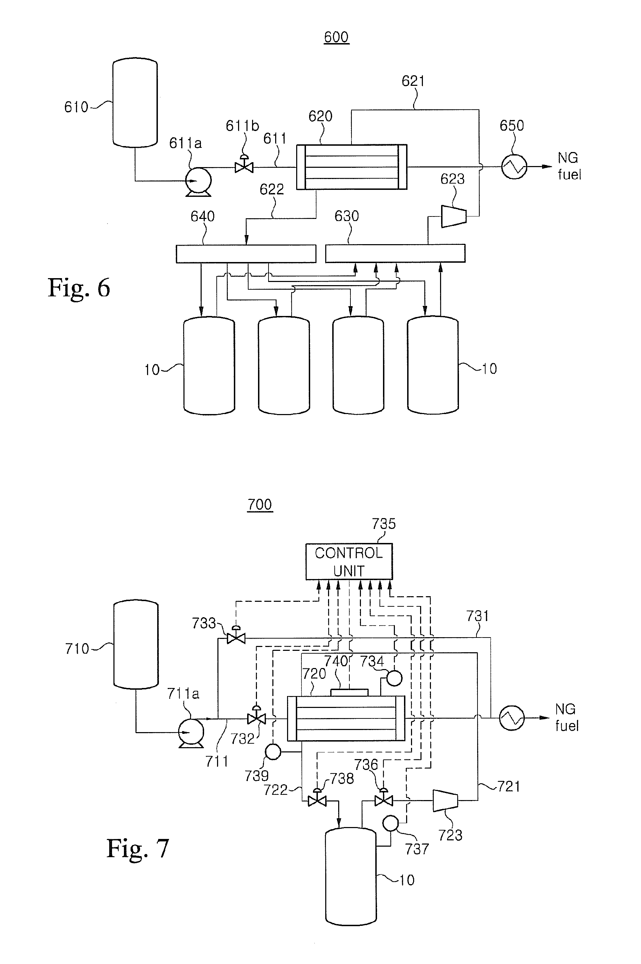

FIG. 6 is a configuration diagram illustrating a cold heat recovery apparatus using an LNG fuel according to a sixth embodiment of the present invention.

As illustrated in FIG. 6, the cold heat recovery apparatus 600 using the LNG fuel according to the sixth embodiment of the present invention may include an LNG fuel tank 610 and a heat exchanger 620 serving as cold heat usage means. The cold heat recovery apparatus 600 using the LNG fuel according to the sixth embodiment differs from the cold heat recovery apparatus according to the third embodiment in that the heat exchanger 620 is used instead of the reliquefaction tank 320.

The LNG fuel tank 610 is a tank that stores an LNG fuel of a liquefied gas carrier. The LNG fuel tank 610 is made of a container for withstanding a pressure and low-temperature of the LNG, and supplies the LNG as a fuel through the LNG line 611. The heat exchanger 620 is installed in the LNG line 611. An LNG pump 611a and an on/off valve 611b may be installed in the front of the heat exchanger 620. The LNG pump 611a is configured to provide a pumping force for transferring the LNG. The on/off valve 611b is provided with a control valve as an example of opening and closing the supply of the LNG. An evaporator 650 may be installed in the rear of the heat exchanger 620 to evaporate the LNG such that the LNG can be used suitably as a gaseous fuel.

The heat exchanger 620 reliquefies boil-off gas supplied from the liquefied gas tank 10 storing the liquefied gas through a gas pipeline 621 by the heat exchange with the LNG discharged from the LNG fuel tank 610 by using a low-temperature characteristic of the LNG, and supplies the reliquefied boil-off gas through a liquid pipeline 622 to the liquefied gas tank 10. In addition, the heat exchanger 620 may be forcibly supplied with the boil-off gas from the liquefied gas tank 10 by a compressor 623 installed in a gas pipeline 621. Therefore, when the heat exchange occurs in the heat exchanger 620, the boil-off gas sublimates, and thus, the boil-off gas can be liquefied without being solidified.

The cold heat recovery apparatus 600 using the LNG fuel according to the sixth embodiment of the present invention may further include a gas manifold 630 and a liquid manifold 640. The gas manifold 330 is configured to supply the heat exchanger 620 with boil-off gas supplied from each of the liquefied gas tanks 10. The liquid manifold 640 is configured to distribute the reliquefied gas discharged from the heat exchanger 620 to each of the liquefied gas tanks 10.

On the other hand, one heat exchanger 620 may be provided like the present embodiment, but the present invention is not limited thereto. For example, a plurality of heat exchangers 620 may be provided. In this case, gas manifolds 630 and liquid manifolds 640 may be installed in the respective heat exchangers 620, or a gas manifold 630 and a liquid manifold 640 may be integrally connected to all heat exchangers 620.

The gas manifold 630 and the liquid manifold 640 are installed in the gas pipeline 621 and the liquid pipeline 622, respectively. The gas pipeline 621 and the liquid pipeline 622 are branched into a plurality of pipelines such that the branched pipelines are connected to liquefied gas tanks 10 on the basis of the gas manifold 630 and the liquid manifold 640.

In the cold heat recovery apparatus 600 using the LNG fuel according to the sixth embodiment of the present invention, when boil-off gas generated from the liquefied gas tank 10 usable as a cargo tank is supplied through the gas pipeline 321 to the heat exchanger 620 by the compressor 623, the boil-off gas is reliquefied by the heat exchange with the LNG of the LNG line 611 passing through the heat exchanger 620, and the reliquefied gas is resupplied to the liquefied gas tank 10 through the liquid pipeline 622 In this case, the heat exchanger 620 is forcibly supplied with the boil-off gas by the compressor 623. Therefore, when the heat exchange occurs in the heat exchanger 620, the boil-off gas sublimates, and thus, the boil-off gas can be liquefied without being solidified.

In addition, it is possible to integrally distribute and manage the boil-off gas generated from the plurality of liquefied gas tanks 10 through the gas manifold 630 and the liquid manifold 640.

FIG. 7 is a configuration diagram illustrating a cold heat recovery apparatus using an LNG fuel according to a seventh embodiment of the present invention.

As illustrated in FIG. 7, like the cold heat recovery apparatus 600 using the LNG fuel according to the sixth embodiment of the present invention, the cold heat recovery apparatus 700 using the LNG fuel according to the seventh embodiment of the present invention includes an LNG fuel tank 710 and a heat exchanger 720 serving as cold heat usage means. The heat exchanger 720 reliquefies boil-off gas supplied from the liquefied gas tank 10 through a gas pipeline 721 by the heat exchange with the LNG discharged from the LNG fuel tank 710 storing an LNG fuel of a liquefied gas carrier through an LNG line 711 by a pumping of an LNG pump 711a, and supplies the reliquefied boil-off gas through a liquid pipeline 722 to the liquefied gas tank 10.

The heat exchanger 720 may be forcibly supplied with the boil-off gas from the liquefied gas tank 10 by a compressor 723 installed in the gas pipeline 721. Like the sixth embodiment, the heat exchanger 720 can be supplied with the boil-off gas from a plurality of liquefied gas tanks 19 by a gas manifold and a liquid manifold, and can be distributed and supplied to the plurality of liquefied gas tanks 10 after reliquefying the boil-off gas.

In addition, the cold heat recovery apparatus 700 using the LNG fuel according to the seventh embodiment of the present invention may further include a bypass line 731 and control valves 732 and 733. The bypass line 731 is connected to the LNG line 711 to bypass the heat exchanger 720. The control valves 732 and 733 are installed in the LNG line 711 and the bypass line 731 to control the flow of the LNG through the heat exchanger 720 and the bypass line 731. Like the present embodiment, a pair of control valves 732 and 733 may be installed in the bypass line 731 and the LNG line 711, respectively. Alternatively, the control valves 732 and 733 may be a single three-way valve installed in a connection portion of the bypass line 731 and the LNG line 711.

The cold heat recovery apparatus 700 using the LNG fuel according to the seventh embodiment of the present invention may further include a detection unit 734 and a control unit 735. The detection unit 734 measures the temperature or pressure inside the heat exchanger 720 and outputs a detection signal. The control unit 735 receives the detection signal output from the detection unit 734 and controls the control valves 732 and 733. The detection unit 734 may be a temperature sensor configured to measure the temperature inside the heat exchanger 720, or a pressure sensor configured to measure the pressure inside the heat exchanger 720. Therefore, when the temperature or pressure inside the heat exchanger 720 measured by the detection unit 734 is higher than a set temperature or a set pressure, the control unit 735 controls the control valves 732 and 733 such that the flow rate of the LNG passing through the heat exchanger 720 is more increased than that passing through the bypass line 731. On the other hand, when it is detected that the temperature or pressure inside the heat exchanger 720 is lower than the set temperature or the set pressure, the control unit 735 controls the control valves 732 and 733 such that the flow rate of the LNG passing through the bypass line 731 is increased.

A heater 740 may be installed inside (or outside) the heat exchanger 720 to provide heat. In addition, a temperature detection unit 739 may be installed in the liquid pipeline 722 to measure the temperature of the reliquefied gas and output a detection signal. The control unit 735 receives the detection signal of the temperature detection unit 739 and controls the heater 740. For example, when the temperature of the reliquefied liquefied gas within the liquid pipeline 722 detected by the temperature detection unit 739 falls to below a preset temperature, the control unit 735 operates the heater 740 to heat the heat exchanger 720 to thereby increase the temperature of the reliquefied liquefied gas.

On the other hand, the heater 740 may be installed inside or outside the heat exchanger 720. The heater 740 may be provided with a hot wire or a heating block configured to convert electric energy into thermal energy, or may be provided with a heating pipe configured to circulate and supply a heating medium such as steam or hot water.

The cold heat recovery apparatus 700 using the LNG fuel according to the seventh embodiment of the present invention may further include a control valve 736, a pressure detection unit 737, and a control unit 735. The control valve 736 is installed in the gas pipeline 721. The pressure detection unit 735 measures the pressure inside the liquefied gas tank 10 and outputs a detection signal. The control unit 735 receives the detection signal of the pressure detection unit 737 and controls the control valve 536. Therefore, when the pressure of the liquefied gas tank 10 detected by the pressure detection unit 737 becomes higher than the preset pressure, the control unit 735 opens the control valve 736 to supply the boil-off gas to the heat exchanger 720 so that the pressure inside the liquefied gas tank 10 is reduced. On the other hand, a control valve 738 configured to perform an operation corresponding to the control valve 736 installed in the gas pipeline may be installed in the liquid pipeline 722.

As described above, in the cold heat recovery apparatus 700 using the LNG fuel according to the seventh embodiment of the present invention, when the temperature or pressure of the heat exchanger 720 detected by the detection unit 734 is higher than the set temperature or the set pressure, the control unit 735 controls the control valves 722 and 723 such that the flow of the LNG via the LNG line 711 passing through the heat exchanger 720 is increased. When the temperature or pressure of the heat exchanger 720 is lower than the set temperature or the set pressure, the control unit 735 controls the control valves 722 and 723 such that the flow of the LNG via the LNG line 711 is reduced and the flow of the LNG passing through the bypass line 731 is increased.

When the temperature of the reliquefied liquefied gas within the liquid pipeline 722 detected by the temperature detection unit 739 falls to below the preset temperature, the control unit 735 operates the heater 740 to heat the heat exchanger 720 to thereby increase the temperature of the reliquefied liquefied gas. In addition, when the pressure inside the liquefied gas tank 10 detected by the pressure detection unit 737 becomes higher than the set pressure, the control unit 735 may reduce the pressure inside the liquefied gas tank 10 by opening the control valve 736. When the pressure inside the liquefied gas tank 10 becomes lower than the set pressure, the control unit 735 may increase the pressure inside the liquefied gas tank 10 by closing the control valve 536.

As described above in detail, the liquefied gas carrier using the LNG as the fuel according to the present invention may include the cold heat recovery apparatus using the LNG fuel according to the first to seventh embodiments of the present invention, and may include a storage tank capable of storing liquefied gas such as LPG or CO₂ as a cargo, and a fuel tank capable of storing the LNG as a fuel.

The present invention is not limited to the above-mentioned embodiments, and it is obvious to those skilled in the art that various modifications or changes can also be made thereto without departing from the scope of the present invention.

## Claims

1. A cold heat recovery apparatus for processing boil-off gas generated in a liquefied gas tank by using cold heat of an LNG fuel, comprising:
cold heat usage means for using cold heat of an LNG supplied from an LNG fuel tank storing an LNG as a fuel to an engine, so as to process the boil-off gas generated in the liquefied gas tank.

2. The cold heat recovery apparatus according to claim 1, wherein the cold heat usage means is a pressure control unit configured to control a pressure of the liquefied gas tank by using the cold heat of the LNG discharged from the LNG fuel tank, and
the pressure control unit comprises an LNG line installed to pass through the liquefied gas tank from the LNG fuel tank and configured to cause heat exchange between the LNG and a fluid stored in the liquefied gas tank.

3. The cold heat recovery apparatus according to claim 2, wherein the pressure control unit further comprises a heater installed in front of the liquefied gas tank in the LNG line.

4. The cold heat recovery apparatus according to claim 2, wherein the pressure control unit further comprises:
a first bypass line connected to the LNG line to bypass the liquefied gas tank;
a control valve configured to control a flow of the LNG passing through the first bypass line;
a pressure detection unit installed in the liquefied gas tank and configured to measure a pressure inside the liquefied gas tank and output a detection signal; and
a control unit configured to receive the detection signal output from the pressure detection unit and control the control valve.

5. The cold heat recovery apparatus according to claim 2, further comprising:
an evaporator installed in rear of the liquefied gas tank in the LNG line;
a temperature detection unit installed in rear of the evaporator in the LNG line and configured to measure a temperature of the fluid passing through the evaporator and output a detection signal; and
a control unit configured to receive the detection signal output from the temperature detection unit and control a heat quantity of the evaporator.

6. The cold heat recovery apparatus according to claim 1, wherein the cold heat usage means is a pressure control unit configured to control a pressure of the liquefied gas tank by using the cold heat of the LNG discharged from the LNG fuel tank, and
the pressure control unit comprises:
an LNG line configured to transfer the LNG from the LNG fuel tank;
a heat exchanger installed in the LNG line; and
a coolant circulation line configured to circulate and supply a coolant to the heat exchanger and installed to pass through the liquefied gas tank.

7. The cold heat recovery apparatus according to claim 6, wherein the pressure control unit further comprises:
a make-up tank configured to supply the coolant to the LNG line;
a pressure detection unit installed in the liquefied gas tank and configured to measure a pressure inside the liquefied gas tank and output a detection signal; and
a control unit configured to receive the detection signal output from the pressure detection unit and control the supply of the coolant from the make-up tank to the LNG line.

8. The cold heat recovery apparatus according to claim 6, wherein the pressure control unit further comprises:
a coolant pump configured to provide a pumping force for circulating the coolant through the coolant circulation line;
a pressure detection unit installed in the liquefied gas tank and configured to measure a pressure inside the liquefied gas tank and output a detection signal; and
a control unit configured to receive the detection signal output from the pressure detection unit and control the pumping force of the coolant pump provided with a variable pump.

9. The cold heat recovery apparatus according to claim 6, wherein the pressure control unit further comprises:
a second bypass line connected to the LNG line to bypass the heat exchanger;
a control valve configured to control a flow of the LNG passing through the second bypass line;
a pressure detection unit installed in the liquefied gas tank and configured to measure a pressure inside the liquefied gas tank and output a detection signal; and
a control unit configured to receive the detection signal output from the pressure detection unit and control the control valve.

10. The cold heat recovery apparatus according to claim 1, wherein the cold heat usage means is a reliquefaction tank configured to reliquefy boil-off gas, which is supplied from the liquefied gas tank storing the liquefied gas through a gas pipeline, by using the cold heat of the LNG discharged from the LNG fuel tank, and return the reliquefied boil-off gas to the liquefied gas tank through a liquid pipeline.

11. The cold heat recovery apparatus according to claim 10, wherein an LNG line configured to discharge the LNG from the LNG fuel tank is installed to pass through the reliquefaction tank, such that the boil-off gas is reliquefied by heat exchange with the LNG.

12. The cold heat recovery apparatus according to claim 10, further comprising:
a gas manifold configured to supply the reliquefaction tank with boil-off gas supplied from each of a plurality of liquefied gas tanks; and
a liquid manifold configured to distribute the reliquefied gas discharged from the reliquefaction tank to each of the liquefied gas tanks and return the reliquefied gas thereto.

13. The cold heat recovery apparatus according to claim 10, wherein the cold heat usage means further comprises a coolant circulation unit configured to transfer the cold heat of the LNG discharged from the LNG fuel tank through the circulating coolant to the reliquefaction tank.

14. The cold heat recovery apparatus claim 13, wherein the coolant circulation unit comprises:
a heat exchanger installed in the LNG line through which the LNG is discharged from the LNG fuel tank; and
a coolant circulation line configured to circulate and supply the coolant to the heat exchanger and installed to pass through the reliquefaction tank.

15. The cold heat recovery apparatus according to claim 11, further comprising:
a bypass line connected to the LNG line to bypass the reliquefaction tank; and
a control valve configured to control a flow of the LNG through the bypass line.

16. The cold heat recovery apparatus according to claim 15, further comprising:
a detection unit configured to measure a temperature or pressure inside the reliquefaction tank and output a detection signal; and
a control unit configured to receive the detection signal output from the detection unit and control the control valve.

17. The cold heat recovery apparatus according to claim 1, wherein the cold heat usage means is a heat exchanger configured to perform heat exchange between boil-off gas, which is supplied from the liquefied gas tank storing the liquefied gas through a gas pipeline, and the LNG, which is discharged from the LNG fuel tank, and return the boil-off gas to the liquefied gas tank through a liquid pipeline.

18. The cold heat recovery apparatus according to claim 17, further comprising:
a heater installed to provide heat to an inside of the heat exchanger;
a temperature detection unit installed in the liquid pipeline and configured to measure a temperature of the reliquefied gas and output a detection signal; and
a control unit configured to receive the detection signal of the temperature detection unit and control the heater.

19. A liquefied gas carrier for transporting liquefied gas, comprising:
a storage tank capable of storing the liquefied gas as a cargo;
an LNG fuel tank configured to store an LNG as a fuel; and
a cold heat recovery apparatus using an LNG fuel according to any one of claims 1 to 18.

20. The liquefied gas carrier according to claim 8, wherein the liquefied gas stored as the cargo is LPG or CO₂.
